(19) Europäisches Patentamt

European Patent Office

Office européen des brevets

(11) **EP 4 678 695 A1**

(12) **EUROPEAN PATENT APPLICATION**
published in accordance with Art. 153(4) EPC

(43) Date of publication:
**14.01.2026 Bulletin 2026/03**

(21) Application number: 24766890.8

(22) Date of filing: **21.02.2024**

(51) International Patent Classification (IPC):
*C08L 63/00* $^{(2006.01)}$    *C08G 59/66* $^{(2006.01)}$
*C08K 5/053* $^{(2006.01)}$   *C08K 5/17* $^{(2006.01)}$
*C08K 5/37* $^{(2006.01)}$    *C08L 101/00* $^{(2006.01)}$
*C09D 163/00* $^{(2006.01)}$  *C09D 201/00* $^{(2006.01)}$
*C09J 163/00* $^{(2006.01)}$  *C09J 201/00* $^{(2006.01)}$
*C09K 3/10* $^{(2006.01)}$

(52) Cooperative Patent Classification (CPC):
**C08G 59/66; C08K 5/053; C08K 5/17; C08K 5/37;
C08L 63/00; C08L 101/00; C09D 163/00;
C09D 201/00; C09J 163/00; C09J 201/00;
C09K 3/10**

(86) International application number:
**PCT/JP2024/006342**

(87) International publication number:
**WO 2024/185519 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.03.2023 JP 2023035202**

(71) Applicant: ThreeBond Co., Ltd.
**Tokyo 192-0398 (JP)**

(72) Inventor: **WATANABE, Yosuke
Hachioji-shi, Tokyo 192-0398 (JP)**

(74) Representative: **Crow, Martin
Venner Shipley LLP
200 Aldersgate
London EC1A 4HD (GB)**

(54) **CURABLE RESIN COMPOSITION**

(57)    The present invention provides a curable resin composition wherein the curable resin composition can be cured at normal temperature without use of any heat or light source, and a cured product thereof has excellent high compression resistance and sealability. The curable resin composition of the present invention contains the following components (A) to (D):
component (A): a compound having two or more epoxy groups
component (B): a thiol curing agent
component (C): hollow resin particles
component (D): a curing accelerator.

EP 4 678 695 A1

**Description**

**TECHNICAL FIELD**

The present invention relates to a curable resin composition that can be cured at normal temperature and can deal with high compression.

**BACKGROUND ART**

A CIPG (cured-in-place gasket) method has been known as a sealing technique using a sealing agent until now. The CIPG method involves bead-coating a flange of a part to be sealed with a curable resin composition as a sealing agent, curing the curable resin composition to form a gasket, bonding the flange to another flange, and compressing the curable resin composition. The CIPG method is more advantageous in that since bonding is performed after the curing of the curable resin composition, the CIPG method is scarcely affected by outgassing during the curing; and since the members are removable, the members are reusable in contrast to the FIPG (formed-in-place gasket), involving coating a flange of a part to be sealed with a liquid curable resin composition, and bonding, followed by curing. For example, silicone resin, acrylic resin, and polyisobutylene resin which are curable with heat or UV have been used until now as curable resin composition employed for the CIPG method. For example, Japanese Patent Laid-Open No. 2019-156965 discloses an epoxy resin composition that is cured under conditions of a temperature of 80°C and 5 hours.

Prior Art Document

Patent Literature

Patent Literature 1: Japanese Patent Laid-Open No. 2019-156965

**SUMMARY OF INVENTION**

Technical Problem

However, since such a curable resin composition requires energy such as heating or ultraviolet irradiation for subjecting members to a CIPG, it has been feared that heating or ultraviolet rays affect the members.
Furthermore, in the CIPG method, a cured product from a curable resin composition may be used as a gasket under high compression conditions. If the cured product cannot withstand pressure due to high compression to be crushed or deformed, the cured product cannot exhibit sealing performance. In order to avoid this problem, a certain flexibility is required for the cured product from the curable resin composition. Meanwhile, excessive enhancement of the flexibility of the cured product leads to another problem that the cured product transfers a member to be bonded after the curing due to the insufficient curing of the surface of the cured product, so that the member is unreusable.
The present inventors have been completed in view of the above-mentioned situation. An object thereof is to provide a curable resin composition wherein the curable resin composition can be cured at normal temperature without requiring any heat or light source, a cured product thereof can withstand high compression conditions, and furthermore the members are reusable. Another object of the present invention is to provide the cured product from the above-mentioned curable resin composition.

Solution to Problem

The present inventors have made diligent efforts to solve the above-mentioned problem, consequently found that a curable resin composition described in detail below can be cured at normal temperature without requiring any heat or light source, a cured product thereof can withstand high compression conditions, and furthermore the members are reusable, and completed the present invention.
The gist of the present invention will be described as follows.

[1] A curable resin composition containing the following components (A) to (D):

component (A): a compound having two or more epoxy groups

component (B): a thiol curing agent

component (C): hollow resin particles

component (D): a curing accelerator.

[2] The curable resin composition according to [1], wherein the component (B) is (B-1) a thiol curing agent having no disulfide bond and a polyether skeleton in the main chain and/or (B-2) a thiol curing agent having a disulfide bond in the main chain.

[3] The curable resin composition according to [1] or [2], wherein the component (C) is made of an acrylonitrile-methacrylonitrile-methyl methacrylate copolymer.

[4] The curable resin composition according to any of [1] to [3], wherein the component (A) is a hydrogenated epoxy resin.

[5] The curable resin composition according to any of [1] to [4], wherein the component (D) is an amine compound and a polyol compound.

[6] The curable resin composition according to any of [1] to [5], wherein the content of the component (C) is 5 to 70 parts by mass relative to 100 parts by mass of the component (A).

[7] The curable resin composition according to any of [1] to [6], wherein the curable resin composition is a two-part curable resin composition containing the component (A) and the component (C) in a first liquid and the component (B), the component (C), and the component (D) in a second liquid.

[8] The curable resin composition according to any of [1] to [7], wherein the average particle size of the component (C) is 50 to 150 $\mu$m.

[9] A cured product obtained by curing the curable resin composition according to any of [1] to [8].

[10] The curable resin composition according to any of [1] to [9] for use in the CIPG method.

## DESCRIPTION OF EMBODIMENTS

Details of the present invention will then be described. "X to Y" as used herein means that the numerical values (X and Y) described before and after "to" are included as the lower value and the upper value, and namely means "X or more and Y or less". Unless otherwise specified, operations and measurement of physical properties or others are performed under conditions of room temperature (20 to 25°C)/a relative humidity of 40 to 55% RH. The expression "A and/or B" means that A, B, and the combination thereof are included.

[Curable resin composition]

A curable resin composition (hereinafter also referred to as a "curable composition" or merely a "composition") according to an aspect of the present invention contains the following components (A) to (D):

component (A): a compound having two or more epoxy groups

component (B): a thiol curing agent

component (C): hollow resin particles

component (D): a curing accelerator.

Hereinafter, each of the components contained in the curable composition will be described.

[Component (A)]

The component (A) for the present invention is a compound having two or more epoxy groups in one molecule. The component (A) is not particularly limited as long as the component (A) is a compound having two or more epoxy groups in one molecule. However, examples of the component (A) include a bisphenol A-type epoxy resin, a bisphenol F-type epoxy resin, a bisphenol S-type epoxy resin, a bisphenol AD-type epoxy resin, a naphthalene-type epoxy resin, a biphenyl-type epoxy resin, a phenol novolac-type epoxy resin, a brominated bisphenol A-type epoxy resin, a hydrogenated bisphenol A-type epoxy resin, a glycidyl amine-type epoxy resin, a dicyclopentadiene-type epoxy resin, an ortho-cresol novolac-type epoxy resin, and an alicyclic epoxy resin, though not limited thereto. Among the components (A), from the viewpoint of high compression resistance, the component (A) contains preferably a bisphenol-type epoxy resin and/or a hydrogenated bisphenol-type epoxy resin, more preferably a hydrogenated bisphenol-type epoxy resin, and the component (A) the most preferably consists only of a hydrogenated bisphenol A-type epoxy resin. One of these may be used alone, or two or more thereof may be mixed for use.

From the viewpoint of curability, the epoxy equivalent of the component (A) is preferably 50 g/eq or more and less than 400 g/eq, more preferably 100 g/eq or more and less than 300 g/eq. From the viewpoint that the following component (C) is dispersed, the viscosity of the component (A) at 25°C is preferably 0.1 Pa·s to 300 Pa·s, still more preferably 0.1 Pa·s or more and less than 100 Pa·s, the most preferably 0.1 Pa·s to 10 Pa·s.

Examples of commercially available products of the component (A) include jER828, 1001, 806, 807, 152, 604, 630, 871, YX8000, YX8034, and YX4000 (manufactured by Mitsubishi Chemical Corporation); Epiclon 830, EXA-830LVP, EXA-850CRP, EXA-835LV, HP4032D, HP4700, and HP820 (manufactured by DIC Corporation); EP-4100, EP-4100G, EP-4100E, EP-4100TX, EP-4300E, EP-4000, EP-4000G, EP-4000E, EP-4000TX, EP-4005, EP-4400, EP-4520S, EP-4530, EP-4901, EP-4901EP-4080, EP-4085, EP-4088, EP-5100-75X, EP-7001, EP-4080E, EPU-6, EPU-7N, EPU-11F, EPU-15F, EPU-1395, EPU-73B, EPU-17, EPU-17, EPU-17T-6, EPU-80, EPR-1415-1, EPR-2000, EPR2007, EPR-1630, EP-49-10N, EP-49-10P2, EPR4023, and EPR2007 (manufactured by ADEKA Corporation); Denacol EX-211, EX-212, EX-252, EX-810, EX-810, EX-811, EX-850, EX-851, EX-821, EX-830, EX-832, EX-841, EX-861, EX-920, and EX-931 (manufactured by Nagase Chemtex Corporation); TEPIC, TEPIC-S, and TEPIC-VL (manufactured by Nissan Chemical Corporation); SY-35M, SR-NPG, and SR-TMP (manufactured by Sakamoto Yakuhin Kogyo Co., Ltd.); and RIKARESIN HBE-100, DME-100, L-200, BPO-20E, and BPO-60E (manufactured by New Japan Chemical Co., Ltd.), though not limited thereto. One of these may be used alone, or two or more thereof may be mixed for use.

[Component (B)]

The component (B) is a thiol curing agent. The thiol curing agent is not particularly limited as long as the component (B) has a thiol group (SH group), but from the viewpoint of compression resistance and normal temperature curability, a compound having two or more thiol groups is preferred. Specific examples of the component (B) include trimethylolpropane tris(3-mercaptopropionate), tris-[(3-mercaptopropionyloxy)-ethyl]-isocyanurate, pentaerythritol tetrakis(3-mercaptopropionate), tetraethylene glycol bis(3-mercaptopropionate), dipentaerythritol hexakis(3-mercaptoproionate) pentaerythritol tetrakis(3-mercaptobutyrate), 1,4-bis(3-mercaptobutyryloxy)butane, 1,3,5-tris(3-mercaptobutyryloxyethyl)-1,3,5-triazine-2,4,6-(1H,3H,5H)-trione, trimethylolpropane tris(3-mercaptobutyrate), trimethylolethane tris(3-mercaptobutyrate), trimethylolpropane tris(3-mercaptobutyrate), trimethylolethane tris(3-mercaptobutyrate), and a polysulfide polymer, though not limited thereto. One of these may be used alone, or two or more thereof may be mixed for use. Among the components (B), from the viewpoint of achievement of sealability during high compression, the component (B) preferably contains (B-1) a thiol curing agent having no disulfide bond and a polyether skeleton in the main chain and/or (B-2) a thiol curing agent having a disulfide bond in the main chain, and more preferably contains both (B-1) the thiol curing agent having no disulfide bond and a polyether skeleton in the main chain and (B-2) the thiol curing agent having a disulfide bond in the main chain. It is preferable that (B-1) the thiol curing agent having no disulfide bond and a polyether skeleton in the main chain be a polymer having no disulfide bond and a polyether skeleton in the main chain and three or more thiol groups in one molecule. It is preferable that (B-2) the thiol curing agent having a disulfide bond in the main chain be a polymer having a disulfide bond and a polyether skeleton in the main chain and a thiol group at an end. In an embodiment, it is more preferable that the component (B) contain a polymer having no disulfide bond and a polyether skeleton in the main chain and three or more thiol groups in one molecule and/or a polymer having a disulfide bond and a polyether skeleton in the main chain and a thiol group at an end, and it is the most preferable that the component (B) contain both the polymer having no disulfide bond and a polyether skeleton in the main chain and three or more thiol groups in one molecule and the polymer having a disulfide bond in the main chain and a thiol group at an end.

Examples of the commercially available product of the component (B) include TMMP, TEMPIC, PEMP, EGMP-4, and DPMP (SAKAI CHEMICAL INDUSTRY CO., LTD.), Karenz MTPE1, BD1, NR1, and TPMB (Showa Denko K.K.); and THIOKOL LP, FLEP, and POLYTHIOL QE-340M (Toray Fine Chemicals Co., Ltd.), though not limited thereto.

If the component (B) contains (B-2) the polymer having a disulfide bond and a polyether skeleton in the main chain and a thiol group at an end, from the viewpoint of compression resistance, the average molecular weight is preferably 500 to 4000, more preferably 600 to 3000, the most preferably 800 to 2000. If the component (B) contains both thiol curing agent (B-1) having no disulfide bond and a polyether skeleton in the main chain, and the thiol curing agent (B-2) having a disulfide bond in the main chain, the component (B) preferably contains the thiol curing agent (B-1) and the thiol curing agent (B-2) at a ratio of (B-1) : (B-2) of preferably 10:90 to 90:10, more preferably 20:80 to 80:20, the most preferably 40:60 to 60:40. If the ratio of (B-1) : (B-2) is 10:90 to 90:10, the compatibility between normal temperature curability and sealability during high compression can be achieved.

The component (B) is contained at a content of preferably 20 to 200 parts by mass, more preferably 50 to 150 parts by mass, the most preferably 70 to 120 parts by mass, relative to 100 parts by mass of the component (A). If the content is 20 parts by mass or more, the cured product is flexible, and can exhibit sealability. If the content is 200 parts by mass or less, the curable resin composition is free from risk of deterioration in surface curability, and the members are reusable.

[Component (C)]

The component (C) for the present invention is hollow resin particles. The hollow resin particles refer to particles that are hollow objects, having an interior cavity, and are formed of resin. Even the compression of the cured product containing the component (C) under high compression results in low reaction force, and enables achieving high sealability. The reaction force as used herein means repulsive force to the compression. If high compression generates high reaction force, the members may be distorted.

The component (C) may have any shape such as spherical, acicular, fibrous, and platy shapes, though not particularly limited thereto. The spherical shape is preferable from the viewpoints of dispersibility in the component (A) and the component (B) and sealability during high compression. The spherical shape as used in the present invention means that the aspect ratio is 1.0 to 2.0, preferably 1.0 to 1.5. The spherical shape does not mean a true spherical shape necessarily. In the case of a spherical shape, the aspect ratio can be found from the ratio of the major axis/the minor axis.

Although the average particle size of the component (C) is not particularly limited, but the average particle size is, for example, 5 to 200 $\mu$m, preferably 10 to 200 $\mu$m, more preferably 40 to 170 $\mu$m, still more preferably 50 to 150 $\mu$m, the most preferably 100 to 150 $\mu$m. If the average particle size is 5 to 200 $\mu$m, the cured product has low reaction force, and the curable resin composition enables obtaining the cured product having high sealability even under high compression conditions. The average particle size as used herein means the particle size (D50) at a cumulative volume ratio of 50% in the particle size distribution determined by laser diffraction and scattering.

Although the resin constituting the component (C) is not particularly limited, but the resin is preferably a thermoplastic resin, more preferably a polymer (homopolymer) of one or more monomers or a copolymer of two or more monomers, wherein the monomer is selected from the group consisting of vinylidene chloride, acrylonitrile, methacrylonitrile, acrylic acid ester, and methacrylic acid ester. From the viewpoint of sealability during high compression, the resin is preferably a copolymer, more preferably a polymer containing acrylonitrile as a constituent unit, the most preferably an acrylonitrile-methacrylonitrile-methyl methacrylate copolymer. From the viewpoints of dispersibility in the component (A) and the component (B) and sealability during high compression, the component (C) has preferably an inorganic filler attached to the surface, and more preferably calcium carbonate attached to the surface.

The true specific gravity of the component (C) is preferably 0.001 to 0.3, preferably 0.01 to 0.2, the most preferably 0.01 to 0.15 from the viewpoint of dispersibility in the component (A) and the component (B). The true specific gravity of the component (B) means the true specific gravity that is determined by the technique in accordance with JIS Z 8807:2012.

The component (C) is contained at a content of preferably 5 to 70 parts by mass, more preferably 10 to 60 parts by mass, the most preferably 15 to 50 parts by mass, relative to 100 parts by mass of the component (A). If the content is 5 to 70 parts by mass, the cured product has low reaction force, and can achieve high sealability even under high compression conditions.

[Component (D)]

In the present invention, a curing accelerator is further contained as the component (D). As long as the curing accelerator can accelerate the effect of the component (B), the curing accelerator is not particularly limited. From the viewpoint of achievement of normal temperature curability, the component (D) contains preferably one or more compounds selected from the group consisting of an imidazole compound, an amine compound, and a polyol compound, more preferably an amine compound and/or a polyol compound, the most preferably a tertiary amine compound and/or a polyol compound. Specific examples of the tertiary amine compound include N,N,N',N'-tetramethyl-1,3-dimaninopropane, N,N,N',N'-tetramethyl-1,6-dimaninohexane, N,N-dimethylbenzylamine, N-methyl-N-(dimethylaminopropyl)aminoethanol, (dimethylaminomethyl)phenol, 2,4,6-tris(dimethylaminomethyl)phenol, tripropylamine, diazabicycloundecene, and diazabicyclononene. Examples of the polyol compound include aliphatic polyols such as ethylene glycol, propylene glycol, 1,4-butanediol, 1,3-butanediol, 1,9-nonanediol, neopentyl glycol, tricyclodecanedimethylol, cyclohexanedimethylol, trimethylolpropane, glycerin, hydrogenated polybutadiene polyol, and hydrogenated dimer diol; (poly)ether polyols having one or more ether bonds such as diethylene glycol, tripropylene glycol, polyethylene glycol, polypropylene glycol, polytetramethylene glycol, trimethylolpropanepolyethoxy triol, glycerin polypropoxytriol, bisphenol A polyethoxydiol, bisphenol F polyethoxydiol, and ditrimethylol propane; and polyester polyol compounds, polycaprolactone polyol compounds, polyol compounds having a phenolic hydroxy group, and polycarbonate polyols such as polycarbonate diol. One of these may be used alone, or two or more thereof may be mixed for use. From the viewpoint of accelerating the curing of the component (B), it is preferable that the component (D) contain both an amine compound that is liquid at 25°C and a polyol compound that is solid at 25°C, and it is preferable that 2,4,6-tris(dimethylaminomethyl)phenol be combined with trimethylolpropane.

If the component (D) is liquid at 25°C, from the viewpoint of the dispersibility of the component (C), the viscosity at 25°C is preferably 1 to 10000 mPa·s, more preferably 10 to 5000 mPa·s, the most preferably 100 to 1000 mPa·s.

If the component (D) is solid at 25°C, the component (D) has a melting point of preferably 30 to 80°C, more preferably 40 to 75°C, the most preferably 50 to 70°C.

The content of the component (D) is preferably 0.1 to 20 parts by mass, more preferably 0.5 to 15 parts by mass, the most preferably 1 to 10 parts by mass, relative to 100 parts by mass of the component (B). If the content is 0.1 to 20 parts by mass, the curable resin composition can achieve normal temperature curability without deterioration in storage stability. If the tertiary amine compound is combined with the polyol compound, the mass ratio of the amine compound : the polyol compound is preferably 9:1 to 5:5, more preferably 8:2 to 5:5, the most preferably 7:3 to 5:5. If the mass ratio is from 9:1 to 5:5, the combination of the component (D) with the component (B) enables achieving excellent normal temperature curability.

Furthermore, the curable resin composition may further contain appropriate amounts of additives such as an inorganic filler, an organic filler other than the component (C), a pigment, a dye, a silane coupling agent, a levelling agent, a rheology controller, and a storage stabilizer as long as the characteristics of the present invention are not deteriorated.

Examples of the inorganic filler include alumina powder, calcium carbonate powder, talc powder, silica powder, fumed silica powder, silver powder, nickel powder, palladium powder, carbon powder, tungsten powder, and plated powder, though not limited thereto. The suitable range of the amount of the inorganic filler blended is preferably 1 to 50 parts by mass, more preferably 5 to 30 parts by mass, relative to 100 parts by mass of the component (A).

The organic filler other than the component (C) may be an organic solid body constituted of rubber, elastomer, plastic, a polymer (or copolymer), or the like. Alternatively, the organic filler may be an organic filler having a muti-layer structure such as a core-shell type structure. It is preferable that the average particle size of the organic filler be in the range of 0.05 to 50 μm. From the viewpoint of improving the characteristics in a durability test, it is preferable that the curable resin composition contains a filler containing a polymer or a copolymer of acrylic acid ester and/or (meth)acrylic acid ester, or a filler containing a polymer or a copolymer of a styrene compound. The suitable amount of the organic filler blended is preferably 1 to 50 parts by mass, more preferably 5 to 30 parts by mass, relative to 100 parts by mass of the component (A).

Examples of the silane coupling agent include glycidyl group-containing silane coupling agents such as 3-acryloxypropyltrimethoxysilane, 3-glycidoxypropylmethyldimethoxysilane, 3-glycidoxypropylmethyldiethoxysilane, 3-glycidoxypropylmethyldipropyloxysilane, 3-glycidoxypropyldimethylmonomethoxysilane, 3-glycidoxypropyldimethylmonoethoxysilane, 3-glycidoxypropyldimethylmonopropyloxysilane, 2-(3,4-epoxycyclohexyl)ethyltrimethoxysilane, 3-glycidoxypropyltriethoxysilane, 3-glycidoxypropyltrimethoxysilane, and 3-glycidoxypropylmethyldiethoxysilane; vinyl group-containing silane coupling agents such as vinyltris(β-methoxyethoxy)silane, vinyltriethoxysilane, and vinyltrimethoxysilane; (meth)acrylic group-containing silane coupling agents such as 3-methacryloxypropylmethyldimethoxysilane, 3-methacryloxypropylmethyldiethoxysilane, 3-methacryloxypropyldimethylmonomethoxysilane, 3-methacryloxypropyldimethylmonoethoxysilane, 3-acryloxypropylmethyldipropyloxysilane, 3-acryloxypropylmethyldimethoxysilane, 3-acryloxypropylmethyldiethoxysilane, 3-acryloxypropylmethyldipropyloxysilane, 3-acryloxypropyldimethylmonopropyloxysilane, 3-acryloxypropyldimethylmonomethoxysilane, 3-acryloxypropyldimethylmonoethoxysilane, 3-acryloxypropyldimethylmonopropyloxysilane, and γ-methacryloxypropyltrimethoxysilane; amino group-containing silane coupling agents such as N-β-(aminoethyl)-y-aminopropyltrimethoxysilane, γ-aminopropyltriethoxysilane, and N-phenyl-γ-aminopropyltrimethoxysilane; γ-mercaptopropyltrimethoxysilane; and γ-chloropropyltrimethoxysilane. Among these, a glycidyl group-containing silane coupling agent is more preferred from the viewpoint of excellent adhesive strength. These may be used alone, or two or more thereof may be used in combination. The suitable range of the amount of the silane coupling agent blended is 0.1 to 20 parts by mass relative to 100 parts by mass of the component (A) of the present invention.

As the storage stabilizer, a boric acid ester, phosphoric acid, an alkyl phosphoric acid ester, p-toluenesulfonic acid can be used. Examples of the boric acid ester include tributyl borate, trimethoxyboroxine, and ethyl borate, though not limited thereto. Examples of the alkyl phosphoric acid ester that can be used include trimethyl phosphate and tributyl phosphate, though not limited thereto. The storage stabilizers may be used alone, or a plurality thereof may be mixed for use. In consideration of the effect on the curing shrinkage, the storage stabilizer is preferably one or more selected from the group consisting of phosphoric acid, an alkyl phosphoric acid ester, a boric acid ester, trimethoxyboroxine, and methyl p-toluenesulfonate, and most preferably phosphoric acid, a boric acid ester. From the viewpoint of maintaining the curability and curing shrinkage, the suitable amount of the storage stabilizer blended is 0.1 to 10 parts by mass relative to 100 parts by mass of the component (A).

<Coating method>

As the method for applying the curing resin composition of the present invention to an adherend, a known method for applying a sealing agent or an adhesive is used. Examples of usable methods include methods such as dispensing with an automatic applicator, spraying, ink jetting, screen printing, gravure printing, dipping, and spin coating.

<CIPG>

Since the curable resin composition of the present invention forms a cured product that can withstand high compression, the curable resin composition can be suitably used for CIPG. The CIPG is a technique involving bead-coating a flange of a part to be sealed with the curable resin composition, for example, using an automatic applicator, curing the curable resin composition under any curing conditions to form a gasket, and bonding the flange to another flange, resulting in compression sealing. More specifically, the CIPG is

a method for at least partially sealing the gap between at least two flanges of parts to be sealed having the at least two flanges,

the method being a sealing method involving:

a step of applying the curable resin composition described above to at least one of the flanges;

a step of curing the applied curable resin composition to form a gasket made of a cured product from the curable resin composition; and

a step of disposing the other flange on the gasket to pressure-bond the one flange coated with the curable resin composition to the other flange through the gasket, at least partially sealing the gap between the at least two flanges.

<Curing method>

The curable resin composition of the present invention can be cured at normal temperature. The normal temperature meant in the present invention refers to a temperature of 20°C or more and less than 30°C. Although the curing time is not particularly limited, but the curing time is preferably 1 minute or more and less than 24 hours, still more preferably 1 hour or more and less than 2 hours at normal temperature.

<Two-part curable resin composition>

It is preferable that the curable resin composition of the present invention consists of two parts from the viewpoint of storage stability. It is preferable that the two-part curable resin composition of the present invention consists of a first liquid (the main agent) and a second liquid (curing agent), the first liquid contains the component (A) and the component (C), and the second liquid contains the component (B), the component (C), and the component (D). Since the (C) component is contained in both first liquid and second liquid, the first liquid can be more easily mixed with the second liquid uniformly. From the viewpoint of workability, it is preferable that the first liquid be mixed with the second liquid at a mixing ratio of the mass of the first liquid : the mass of the second liquid of 40:60 to 60:40.

<Purposes>

The curable resin composition of the present invention can be used for various purposes. Specific examples of possible uses include adhesion, sealing, casting, and coating of switch parts for automobiles, head lamps, engine internal components, electrical components, driving engines, brake oil tanks, body panels such as front hoods, fenders, and doors, and windows; in an electronic material field, adhesion, sealing, casting, and coating of flat panel displays (liquid crystal displays, organic EL displays, light emitting diode display devices, and field emission displays), video disks, CDs, DVDs, MDs, pickup lenses, and hard disks; in a field of batteries, adhesion, sealing, and coating of lithium batteries, lithium ion batteries, manganese batteries, alkaline batteries, fuel cells, silicon-based solar cells, dye-sensitized cells, and organic solar cells; in an optical component field, adhesion, sealing, and coating of optical switch peripheries, optical fiber materials of optical connector peripheries, optical passive components, optical circuit components, and optoelectronic integrated circuit peripheries; in an optical equipment field, adhesion, sealing, and coating of camera modules, materials for lenses, finder prisms, target prisms, finder covers, light-receiving sensor parts, photographing lenses, and projection lenses of projection televisions; and in an infrastructure field, adhesion of gas pipes and water pipes, lining materials, sealing, and coating materials. From the viewpoint that the cured product has excellent compression resistance, the curable resin composition is suitable for sealing.

Examples

Then, the present invention will be described in more detail with reference to Examples, though the present invention is not limited to the following Examples only.

[Examples 1 to 3 and Comparative Examples 1 to 4]

In order to prepare curable resin compositions, the following components were provided.

(A): Hydrogenated bisphenol A-type epoxy resin, trade name: RIKARESIN HBE-100 (manufactured by New Japan Chemical Co., Ltd.), epoxy equivalent: 215 g/eq, viscosity (25°C): 2 Pa·s

(B-1): Polymer having no disulfide bond and a polyether skeleton in the main chain and three or more thiol groups in one molecule, trade name: POLYTHIOL QE-340M

(B-2): Polymer having a disulfide bond and a polyether skeleton in the main chain and having a thiol group on an end, trade name: THIOKOL LP-3, average molecular weight; 1000

(C-1): Hollow resin particles made of acrylonitrile-methacrylonitrile-methyl methacrylate copolymer wherein calcium carbonate is attached to the surface, trade name: EMC-120$\alpha$ (manufactured by Japan Fillite Co., Ltd.), average particle size: 120 $\mu$m, true specific gravity: 0.10 g/cm$^3$

(C-2): Hollow resin particles made of acrylonitrile-methacrylonitrile-methyl methacrylate copolymer wherein calcium carbonate is attached to the surface, trade name: EMC-80B (manufactured by Japan Fillite Co., Ltd.), average particle size: 80 $\mu$m, true specific gravity: 0.13 g/cm$^3$

(C-3): Hollow resin particles made of acrylonitrile-methacrylonitrile-methyl methacrylate copolymer wherein calcium carbonate is attached to the surface, trade name: EMC-40B (manufactured by Japan Fillite Co., Ltd.), average particle size: 40 $\mu$m, true specific gravity: 0.16 g/cm$^3$

(C'-1): Hollow glass (inorganic) particles, trade name: Glass Bubbles K1 (manufactured by 3M company), average particle size: 65 $\mu$m

(C'-2): Core-shell acrylic resin (solid resin particles), trade name: ZEFIAC F351G (manufactured by Aica Kogyo Company, Limited), average particle size: 0.3 $\mu$m

(D-1): 2,4,6-Tris(dimethylaminomethyl)phenol, trade name: ANCAMINE K54, viscosity (25°C): 200 mPa·s

(D-2): Trimethylolpropane (reagent), melting point: 58°C

The component (A) and the component (C) were weighed in an agitated vessel and stirred with a mixer for 30 minutes to obtain a first liquid. Furthermore, the component (C) and the component (D) were added to the component (B). The mixture was stirred with a mixer for 10 minutes to obtain a second liquid. If the component (D) contained a solid and liquid, the liquid component (D) was warmed to 80°C, and the solid component (D) was dissolved therein. Then the component (D) was returned to normal temperature, and was then mixed into the second liquid. The detailed preparation amounts are as shown in Table 1, and all the numerical values thereof are expressed in part by mass. All the tests were performed at 25°C. A curable resin composition refers to a mixture of the first liquid and the second liquid below.

[Pot life]

Each first liquid and each second liquid shown in Table 1 were weighed at the first liquid : the second liquid = 4.9 g :

5.1 g in a metal vessel made of aluminum and having a thickness of 6 mm and a diameter of 50 mm. The vessel was fixed, and the mixture was mixed and stirred such that a wooden stirring rod was rotated in circles at two rounds/second. The time from the beginning of the stirring until the mixed curable resin composition lost the fluidity was confirmed. Acceptable criteria: 2 h or less.

[Hardness]

Each first liquid and each second liquid shown in Table 1 were mixed at the first liquid : the second liquid = 49 g : 51 g. The mixture was formed into a sheet with a spacer having a thickness of 2 mm and cured at 25°C × 120 hours to obtain a sheet-shaped cured product. Three obtained sheet-shaped cured products were stacked to fabricate a specimen. While the pressure surface of a type A durometer (hardness tester) was kept parallel to the specimen, the pressure surface was pressed against the specimen at a force of 10 N and closely attached to the sample. The maximum value was read during the measurement and defined as the "hardness". The details thereof were in accordance with JIS K 6253 (2012). As the hardness decreases (flexibility increases), a higher effect of buffering stress applied to the members is obtained. Therefore, the hardness is A55 or less, preferably A50 or less. Although the lower limit may be any hardness, the lower limit is preferably A30 or more, more preferably A40 or more.

[Initial reaction force (at a compression ratio of 50%)]

Each first liquid and each second liquid shown in Table 1 were mixed at the first liquid : the second liquid = 49 g : 51 g. The mixture was applied in the shape of a sheet with a spacer having a thickness of 2 mm and cured at 25°C × 120 hours to obtain a cured product. A 20-mm square piece having a thickness of 12 mm was cut out of the cured product and used as a sample. The sample was then compressed at a test compression speed of 0.1 mm/sec in an atmosphere at 25°C with a compressor (manufactured by Instron Japan Company Limited, model number: 8874). When the sample, having a thickness of 2 mm, was compressed at a ratio of 50% to its thickness (that is, the sample was compressed to a thickness of 1 mm), the initial reaction force (unit: MPa) applied to the sensor was measured. Table 1 shows the obtained results. Since high reaction force may deform the members during the compression, the reaction force is preferably 10 MPa or less, more preferably 8 MPa or less, the most preferably 3 MPa or less.

[Rate of change in reaction force (at a compression ratio of 50%) after 100°C × 1 hour]

The cured product for testing the reaction force was left to stand at 100°C for 1 hour and then left to stand at 25°C for 1 hour, followed by a test. A measurement method is same as the method as in the measurement of the initial reaction force. Also if the members were heated, high reaction force may deform the members during the compression. The reaction force after the heating is therefore preferably 10 MPa or less, more preferably 8 MPa or less, the most preferably 3 MPa or less.

[Rate of change in reaction force]

Furthermore, the rate of change was calculated with the initial cured product and the cured product after 100°C × 1 hour according to the following expression.

Rate of change (%) = (reaction force of cured product after heating at 100°C for 1 hour) - (Initial reaction force)/ (Initial reaction force) The rate of change in reaction force is preferably 50% or less, more preferably 40% or less.

[Permanent compression strain]

Each first liquid and each second liquid shown in Table 1 were mixed at the first liquid : the second liquid = 49 g : 51 g. The curable resin composition after mixing was applied in the shape of a sheet with a spacer having a thickness of 2 mm and cured at 25°C × 120 hours to obtain a cured product. A 20-mm square piece having a thickness of 2 mm was cut out of the cured product and used as a specimen for evaluating the permanent compression strain. The specimen was compressed at a compression ratio of 50% with a jig and a spacer specified in JIS K 6262, left to stand in a thermostatic oven at 25°C, and taken out after 240 hours elapsed, followed by removal of the jig. After an elapse of further 24 hours, each of the thicknesses of the specimens were measured. The correlation between these and the measured values of the thicknesses of the specimens before the heating and compression was applied to the following expression to evaluate the compression permanent strains.

Permanent compression strain [%] = (Measured value of film thickness before test - Measured value of film thickness after elapse of 24 hours)/(Measured value of film thickness before test - thickness of spacer) $\times$ 100 (%)

Acceptance criteria: No crushing. The permanent compression strain is more preferably 80% or less, the most preferably 70% or less. The crushing described herein means a state that the curing product cannot withstand the pressure and thus is broken.

[Table 1]

| | | | Example 1 | Example 2 | Example 3 | Comparative Example 1 | Comparative Example 2 | Comparative Example 3 | Comparative Example 4 |
|---|---|---|---|---|---|---|---|---|---|
| First liquid | A | HBE-100 | 100 | 100 | 100 | 100 | 100 | 100 | 100 |
| | C-1 | EMC-120α | 15 | | | | | | 15 |
| | C-2 | EMC-80B | | 15 | | | | | |
| | C-3 | EMC-40B | | | 15 | | | | |
| | C'-1 | Glass Bubbles | | | | 15 | | | |
| | C'-2 | F-351G | | | | | 15 | | |
| Second liquid | B-1 | QE-340M | 55 | 55 | 55 | 55 | 55 | 55 | |
| | B-2 | LP-3 | 45 | 45 | 45 | 45 | 45 | 45 | |
| | C-1 | EMC-120α | 15 | | | | | | 15 |
| | C-2 | EMC-80B | | 15 | | | | | |
| | C-3 | EMC-40B | | | 15 | | | | |
| | C'-1 | Glass Bubbles | | | | 15 | | | |
| | C'-2 | F-351G | | | | | 15 | | |
| | D-1 | K-54 | 5 | 5 | 5 | 5 | 5 | 5 | 5 |
| | D-2 | TMP | 2 | 2 | 2 | 2 | 2 | 2 | 2 |
| Pot life (25°C) | | | 1.5h | 1.5h | 1.5h | 1.5h | 1.5h | 1.5h | 24h |
| Hardness | | | A47 | A51 | A53 | A60 | A60 | A55 | Uncured |
| Initial reaction force (at a compression ratio of 50%) | MPa | | 1.3 | 6.1 | 6.4 | 4.9 | 37.7 | 45.0 | - |
| Reaction force (at a compression ratio of 50%) (after 100°C × 1 hour) | MPa | | 1.8 | 6.2 | 8.5 | 7.4 | 45.0 | 45.0 | 2.4 |
| Rate of change in reaction force (at a compression ratio of 50%) | % | | 38.5 | 1.6 | 32.8 | 51.0 | 19.4 | 0.0 | - |
| Permanent compression strain (at a compression ratio of 50%) | % | | 69 | 69 | 65 | 89 | Crushed | Crushed | Crushed |

EP 4 678 695 A1

As shown in Table 1, Examples 1 to 3 can be cured at normal temperature, and have shown satisfactory results in terms of reaction force and permanent compression strain. Although especially the curable resin composition of Example 1 is equivalent in permanent compression strain to Examples 2 and 3, the curable resin composition of Example 1 is low in reaction force to show an excellent result. Comparative Example 1, containing the hollow inorganic particles instead of the component (C), has obtained a high result in the permanent compression strain test as compared with Examples 1 to 3. Comparative Example 2, containing the solid resin particles instead of the component (C), and Comparative Example 3, not containing any component (C), have generated high reaction force to be crushed in the permanent compression strain test. Even though 24 hours have elapsed, it cannot be confirmed that Comparative Example 4, not containing any component (B), is cured at 25°C. It has been confirmed that Comparative Example 4 is heated at 100°C for 1 hour to be cured. The above shows that the combination of the components (A) to (D) enables forming a cured product that can be cured at normal temperature and withstand stress during high compression.

Industrial Applicability

A curable resin composition of the present invention can be cured at normal temperature without requiring any heat or light source. A cured product thereof generates low reaction force during high compression, and has high compression resistance and excellent sealability. The curable resin composition is therefore useful as an adhesive, a coating agent, or a potting agent, to which the CIPG method is applicable, in various fields.
The present application is based on Japanese Patent Application No. 2023-35202, filed on March 8, 2023. The disclosure thereof is incorporated herein by reference in its entirety.

**Claims**

1.    A curable resin composition comprising the following components (A) to (D):

    component (A): a compound having two or more epoxy groups
    component (B): a thiol curing agent
    component (C): hollow resin particles
    component (D): a curing accelerator.

2.    The curable resin composition according to claim 1, wherein the component (B) is (B-1) a thiol curing agent having no disulfide bond and a polyether skeleton in the main chain and/or (B-2) a thiol curing agent having a disulfide bond in the main chain.

3.    The curable resin composition according to claim 1 or 2, wherein the component (C) is made of an acrylonitrile-methacrylonitrile-methyl methacrylate copolymer.

4.    The curable resin composition according to claim 1 or 2, wherein the component (A) is a hydrogenated epoxy resin.

5.    The curable resin composition according to claim 1 or 2, wherein the component (D) is an amine compound and a polyol compound.

6.    The curable resin composition according to claim 1 or 2, wherein a content of the component (C) is 5 to 70 parts by mass relative to 100 parts by mass of the component (A).

7.    The curable resin composition according to claim 1 or 2, wherein the curable resin composition is a two-part curable resin composition comprising the component (A) and the component (C) in a first liquid and the component (B), the component (C), and the component (D) in a second liquid.

8.    The curable resin composition according to claim 1 or 2, wherein an average particle size of the component (C) is 50 to 150 $\mu$m.

9.    A cured product obtained by curing the curable resin composition according to claim 1 or 2.

10.   The curable resin composition according to claim 1 or 2 for use in a CIPG method.

# EP 4 678 695 A1

## INTERNATIONAL SEARCH REPORT

| | International application No. |
|---|---|
| | **PCT/JP2024/006342** |

**A. CLASSIFICATION OF SUBJECT MATTER**

*C08L 63/00*(2006.01)i; *C08G 59/66*(2006.01)i; *C08K 5/053*(2006.01)i; *C08K 5/17*(2006.01)i; *C08K 5/37*(2006.01)i; *C08L 101/00*(2006.01)i; *C09D 163/00*(2006.01)i; *C09D 201/00*(2006.01)i; *C09J 163/00*(2006.01)i; *C09J 201/00*(2006.01)i; *C09K 3/10*(2006.01)i

FI: C08L63/00 C; C08G59/66; C08K5/053; C08K5/17; C08K5/37; C08L101/00; C09D163/00; C09D201/00; C09J163/00; C09J201/00; C09K3/10 L

According to International Patent Classification (IPC) or to both national classification and IPC

**B. FIELDS SEARCHED**

Minimum documentation searched (classification system followed by classification symbols)

C08L1/00-101/16; C08K3/00-13/08; C09D1/00-201/10; C09J1/00-201/10; C09K3/10; C08G59/00-59/72

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2018-532873 A (PRC-DESOTO INTERNATIONAL, INC.) 08 November 2018 (2018-11-08) claims, paragraph [0122], column "examples" (for example, tables 1, 2), etc. | 1-10 |
| X | JP 2020-506989 A (PRC-DESOTO INTERNATIONAL, INC.) 05 March 2020 (2020-03-05) claims, column "examples", etc. | 1-10 |
| X | JP 2012-500303 A (PPG INDUSTRIES OHIO, INC.) 05 January 2012 (2012-01-05) claims, column "examples" (for example, table 2), etc. | 1-10 |
| X | US 2021/0002429 A1 (SOCOMORE) 07 January 2021 (2021-01-07) claims (in particular, claims 15-16), column "examples" (for example, example 5), etc. | 1-10 |
| X | CN 109306124 A (FU, Keneng) 05 February 2019 (2019-02-05) claims, column "examples" (for example, each example, column (1)), etc. | 1-10 |

☑ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **25 April 2024** | **14 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

13

**INTERNATIONAL SEARCH REPORT**

| International application No. |
| --- |
| **PCT/JP2024/006342** |

### C. DOCUMENTS CONSIDERED TO BE RELEVANT

| Category* | Citation of document, with indication, where appropriate, of the relevant passages | Relevant to claim No. |
| --- | --- | --- |
| X | WO 2022/213016 A1 (PRC-DESOTO INTERNATIONAL, INC.) 06 October 2022 (2022-10-06)<br>claims, paragraph [0413], column "examples" (for example, tables 7-8), etc. | 1-10 |
| X | JP 2014-504663 A (3M INNOVATIVE PROPERTIES COMPANY) 24 February 2014 (2014-02-24)<br>claims, column "examples" (for example, example 15), etc. | 1-10 |
| P, X | WO 2023/090026 A1 (THREEBOND CO., LTD.) 25 May 2023 (2023-05-25)<br>claims, column "examples" (for example, examples 6, 7), etc. | 1-10 |
| A | JP 2002-338789 A (THREEBOND CO., LTD.) 27 November 2002 (2002-11-27) | 1-10 |

Form PCT/ISA/210 (second sheet) (July 2022)

## INTERNATIONAL SEARCH REPORT
### Information on patent family members

International application No.

**PCT/JP2024/006342**

| Patent document cited in search report | | | Publication date (day/month/year) | Patent family member(s) | | | Publication date (day/month/year) |
|---|---|---|---|---|---|---|---|
| JP | 2018-532873 | A | 08 November 2018 | US | 2017/0114259 | A1 | |
| | | | | claims, paragraph [0167], column "examples" (for example, tables 1, 1B), etc. | | | |
| | | | | WO | 2017/074919 | A1 | |
| | | | | KR | 10-2018-0075600 | A | |
| | | | | CN | 108350166 | A | |
| JP | 2020-506989 | A | 05 March 2020 | US | 2018/0215974 | A1 | |
| | | | | claims, column "examples", etc. | | | |
| | | | | WO | 2018/144518 | A1 | |
| | | | | CN | 110234676 | A | |
| | | | | KR | 10-2019-0112309 | A | |
| JP | 2012-500303 | A | 05 January 2012 | US | 2010/0041839 | A1 | |
| | | | | claims, column "examples" (for example, table 2), etc. | | | |
| | | | | WO | 2010/019561 | A1 | |
| | | | | KR | 10-2011-0055620 | A | |
| | | | | CN | 104130746 | A | |
| US | 2021/0002429 | A1 | 07 January 2021 | EP | 3760665 | A1 | |
| CN | 109306124 | A | 05 February 2019 | (Family: none) | | | |
| WO | 2022/213016 | A1 | 06 October 2022 | CN | 117222692 | A | |
| | | | | KR | 10-2023-0159592 | A | |
| JP | 2014-504663 | A | 24 February 2014 | US | 2013/0267136 | A1 | |
| | | | | claims, column "examples" (for example, example 15), etc. | | | |
| | | | | WO | 2012/092332 | A2 | |
| | | | | CN | 103270075 | A | |
| | | | | KR | 10-2013-0141652 | A | |
| WO | 2023/090026 | A1 | 25 May 2023 | TW | 202328269 | A | |
| JP | 2002-338789 | A | 27 November 2002 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019156965 A

- JP 2023035202 A